# EUROPÄISCHE PATENTSCHRIFT

(11) **EP 3 510 315 B1**
(45) Veröffentlichungstag und Bekanntmachung des Hinweises auf die Patenterteilung: **30.09.2020**
(21) Anmeldenummer: 17754347.7
(22) Anmeldetag: 17.08.2017
(51) Int. Cl.: F16L 57/02

(54) **KNICKSCHUTZVORRICHTUNG FÜR EINEN SCHLAUCH**
KINK PROTECTION FOR A HOSE
DISPOSITIF DE PROTECTION ANTI-FLAMBAGE POUR TUYAU FLEXIBLE

(30) Priorität: 09.09.2016 DE 102016116991
(43) Veröffentlichungstag der Anmeldung: 17.07.2019
(73) Patentinhaber: Sartorius Stedim Biotech GmbH, 37079 Göttingen (DE)
(72) Erfinder: KRONENBERG, Diana, 13627 Berlin (DE)
(74) Vertreter: Vigand, Philippe
(86) Internationale Anmeldenummer: PCT/EP2017/070849
(87) Internationale Veröffentlichungsnummer: WO 2018/046273

(56) Entgegenhaltungen:
- EP-A2- 1 882 867
- US-A1- 2005 184 509

## Beschreibung

Die Erfindung betrifft eine Knickschutzvorrichtung für einen Schlauch.

Knickschutzvorrichtungen für Schläuche sollen verhindern, dass sich Knicke in Schläuchen ausbilden, die den Schlauchquerschnitt des Schlauches verringern oder die zu einer Beschädigung der Schlauchwand führen. Knickschutzvorrichtungen für Schläuche oder Kabelstränge, die beispielsweise aus DE 10 2013 208 527 A1, DE 10 2015 201 829 A1, DE 602 04 937 T2, DE 92 18 100 U1, GB 2 413 219 A oder US 9 261 222 B2 bekannt sind, weisen üblicherweise mehrere Bauteile auf, die miteinander schwenkbar oder drehbar verbunden werden, um die Flexibilität des Schlauches oder des Kabelstrangs nicht zu beeinträchtigen. Die einzelnen Teile solcher Knickschutzvorrichtungen sind jedoch starr und umschließen den zu schützenden Schlauch oder Kabelstrang in Umfangsrichtung jeweils vollständig.

Aufgrund der vielen Teile und der notwendigerweise flexiblen Verbindung der Teile untereinander durch Scharniere, Gelenke oder Schrauben sind übliche Knickschutzvorrichtungen teuer in der Produktion und aufwändig in der Montage.

Aus der EP 1 882 867 A2 D1 ist eine Knickschutzvorrichtung mit den Merkmalen des Oberbegriffs des Anspruchs 1 bekannt. In der klappbaren Vorrichtung kann eine elektrische Leitung oder eine Druckluftleitung aufgenommen sein. Die Vorrichtung kann durch Strangpressen hergestellt werden Ein langgestreckter Aufnahmeraum für die Leitung ist von einem Kunstharzfilmband umgeben. Das Kunstharzfilmband ist durch eine Vielzahl von faltbaren V-Nuten gebildet, die sich entlang einer Längsrichtung des Bandes erstrecken, um wiederholt lineare und Biegebewegungen zu ermöglichen.

Eine Knickschutzvorrichtung mit den Merkmalen des Oberbegriffs des Anspruchs 1 zeigt auch die US 2005/184509 A1. Die Vorrichtung weist einen Rahmen mit einem ersten und einem zweiten Rahmenabschnitt auf. Die Rahmenabschnitte sind durch Befestigungsbaugruppen miteinander verbunden. Die Vorrichtung nimmt flexible Leitungen in verschiedenen Winkelkonfigurationen auf.

Es ist Aufgabe der Erfindung, eine Knickschutzvorrichtung bereitzustellen, die sowohl kostengünstig herzustellen als auch einfach zu montieren ist.

Die Aufgabe wird gelöst durch eine Knickschutzvorrichtung gemäß Anspruch 1.

Durch die bandförmige Ausgestaltung des Grundkörpers mit zwei freien Enden ist es nicht notwendig, einen geschlossenen Ring herzustellen, sodass die Produktion vereinfacht wird. Auch wird durch den bandförmigen Grundkörper eine einfache Montage der Knickschutzvorrichtung ermöglicht, weil der Grundkörper mittels der Befestigungsvorsprünge und der Befestigungsvertiefungen sicher und einfach zu einem Ring verbunden werden kann. Der bandförmige Grundkörper ermöglicht es auch, die Knickschutzvorrichtung an Schläuchen anzubringen, die bereits in Anlagen montiert sind.

Gemäß einer grundlegenden bevorzugten Ausgestaltung der erfindungsgemäßen Knickschutzvorrichtung weist der bandförmige Grundkörper eine erste Oberfläche, von der die Befestigungsvorsprünge abstehen, und eine entgegengesetzte zweite Oberfläche auf, in der die Befestigungsvertiefungen vorgesehen sind. Auf diese Weise wird sichergestellt, dass die Knickschutzvorrichtung ohne Verdrehungen des Grundkörpers montiert wird.

Vorzugsweise sind die Befestigungsvorsprünge an einem freien Ende des bandförmigen Grundkörpers in der Nähe einer ersten Querseite des Grundkörpers und die Befestigungsvertiefungen am entgegengesetzten freien Ende des bandförmigen Grundkörpers in der Nähe einer zweiten Querseite des Grundkörpers vorgesehen. Aufgrund der bandartigen Ausbildung des Grundkörpers weist der Grundkörper eine rechteckige Form mit einer Längsrichtung und einer gegenüber der Längsrichtung kürzeren Querrichtung auf. Die Querseiten sind diejenigen Seiten des Grundkörpers, die sich in Querrichtung erstrecken und damit den Grundkörper in Längsrichtung begrenzen, d.h. die Querseiten entsprechen den Stirnflächen der beiden freien Enden des bandförmigen Grundkörpers. Dadurch, dass die Befestigungsvorsprünge und die Befestigungsvertiefungen an beiden freien Enden in der Nähe der Querseiten des Grundkörpers vorgesehen sind, kann die gesamte Länge des Grundkörpers ausgenutzt werden.

Gemäß der Erfindung stellt die Wandung der Befestigungsvertiefungen gleichzeitig die Wandung des entsprechenden Befestigungsvorsprungs dar, wodurch die Knickschutzvorrichtung materialsparend hergestellt werden kann.

Vorzugsweise sind die Befestigungsvorsprünge und die Befestigungsvertiefungen durch Umformen des Grundkörpers, insbesondere durch Tiefziehen, hergestellt, sodass die Knickschutzvorrichtung kostengünstig hergestellt werden kann.

Bevorzugt ist die Knickschutzvorrichtung einstückig ausgeführt, wodurch die Herstellung weiter vereinfacht wird.

Die Knickschutzvorrichtung kann aus nur einem einzigen Material hergestellt sein. Dadurch lassen sich die Herstellungskosten weiter senken. Die Knickschutzvorrichtung ist bevorzugt aus einem Kunststoffmaterial, besonders bevorzugt aus Polypropylen (PP), Polyethylen (PE), Polyethylenterephthalat (PET) oder aus Kombinationen der vorgenannten Materialen, hergestellt.

In einer bevorzugten Ausführungsform der Erfindung hat die Form der Befestigungsvorsprünge eine annähernd rechteckige Grundfläche, wodurch die Knickschutzvorrichtung einfach herzustellen ist. Dabei kann die rechteckige Grundfläche abgerundete oder ausgekehlte Ecken haben. Alternativ hat die Form der Befestigungsvorsprünge eine annähernd kreisförmige, dreieckige, elliptische oder polygonale Grundfläche.

Vorzugsweise ist die Längsrichtung der Grundfläche der Befestigungsvorsprünge im Wesentlichen senkrecht zur Längsrichtung des Grundkörpers orientiert, sodass die Befestigungsvorsprünge in Längsrichtung des Grundkörpers über eine große Fläche Kräfte aufnehmen können.

Bevorzugt verjüngt sich die Form der Befestigungsvorsprünge ausgehend vom Grundkörper in wenigstens einer Richtung, wodurch das Einführen eines Befestigungsvorsprungs in die Befestigungsvertiefung erleichtert wird.

In einer Ausführungsvariante ist die Form der Befestigungsvorsprünge an seiner dem Grundkörper abgewandten Oberseite eben ausgeführt. Dabei ist die ebene Oberseite parallel zum Grundkörper. Auf diese Weise kann die ebene Oberseite der Befestigungsvorsprünge im montierten Zustand der Knickschutzvorrichtung als Auflagefläche für die Schlauchwand zur Abstützung und Lagerung des Schlauches dienen.

In einer weiteren Ausgestaltung der Erfindung weist die Form der Befestigungsvorsprünge eine schräge Führungsfläche auf, die an die Oberseite angrenzt und die zum Grundkörper hin abfällt, wodurch sich der Befestigungsvorsprung beim Einführen in die Befestigungsvertiefung selbsttätig ausrichtet. Außerdem ermöglicht eine schräge Führungsfläche einen lösbaren, d. h. reversiblen, Eingriff des Befestigungsvorsprungs in eine komplementäre Befestigungsvertiefung, wodurch das Öffnen der Knickschutzvorrichtung nach Gebrauch und ihre Wiederverwendung für einen anderen Schlauch erleichtert werden.

Vorzugsweise haben die Befestigungsvertiefungen eine Form, die zu der Form der Befestigungsvorsprünge komplementär ist, sodass ein passgenauer Sitz des Befestigungsvorsprungs in der Befestigungsvertiefung ermöglicht wird.

In einer weiteren Ausführungsform der Erfindung sind die Befestigungsvorsprünge und Befestigungsvertiefungen entlang der Längsrichtung des Grundkörpers vorgesehen sind. Dadurch, dass jeder Befestigungsvorsprung in verschiedene Befestigungsvertiefungen eingreifen kann und verschiedene Befestigungsvorsprünge vorgesehen sind, kann der bandförmige Grundkörper zu einem Ring mit verschiedenen Durchmessern geformt werden. Somit kann die Knickschutzvorrichtung an Schläuchen mit verschiedenen Durchmessern angebracht werden. Dabei kann jeder der Befestigungsvorsprünge in jede der Befestigungsvertiefungen eingreifen, insbesondere haben alle Befestigungsvorsprünge und Befestigungsvertiefungen dieselbe bzw. komplementäre Form. Auch ist es denkbar, dass neben den Befestigungsvorsprüngen und den Befestigungsvertiefungen weitere Vorsprünge und Vertiefungen vorgesehen sind, beispielsweise um den Schlauch abzustützen.

Vorzugsweise sind die mehreren Befestigungsvorsprünge und die mehreren Befestigungsvertiefungen derart ausgebildet, dass gleichzeitig mehrere Befestigungsvorsprünge in jeweils eine der mehreren Befestigungsvertiefungen eingreifen können, wodurch eine besonders sichere Verbindung geschaffen wird, die den aus der Knickschutzvorrichtung gebildeten Ring besonders stabil macht.

In einer Ausgestaltung der Erfindung ist die Knickschutzvorrichtung aus einem Material hergestellt, das Sterilisierungsverfahren, insbesondere einer Sterilisation durch Gammabestrahlung, durch Behandlung mit Ethylenoxid (ETO) oder durch Beaufschlagung mit Elektronenstrahlen oder Heißdampf, standhält. Auf diese Weise eignet sich die Knickschutzvorrichtung für medizinische und biopharmazeutische Anwendungen und insbesondere zur Einweg-Verwendung.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 eine erfindungsgemäße Knickschutzvorrichtung in Draufsicht,
- Figur 2 die Knickschutzvorrichtung nach Figur 1 in Unteransicht,
- Figur 3 die Knickschutzvorrichtung nach Figur 1 in einer Vorderansicht auf eine Längsseite,
- Figur 4 eine Seitenansicht auf eine Querseite der Knickschutzvorrichtung nach Figur 1,
- Figur 5 eine Vorderansicht einer lose um einen Schlauch gelegten Knickschutzvorrichtung in offener Konfiguration, bei welcher ein endständiger Befestigungsvorsprung noch nicht in eine endständige Befestigungsvertiefung eingreift, und
- Figur 6 eine Vorderansicht einer um einen Schlauch montierten Knickschutzvorrichtung nach Figur 1 und Figur 5 in geschlossener Konfiguration, bei welcher der endständige Befestigungsvorsprung in die endständige Befestigungsvertiefung eingreift.

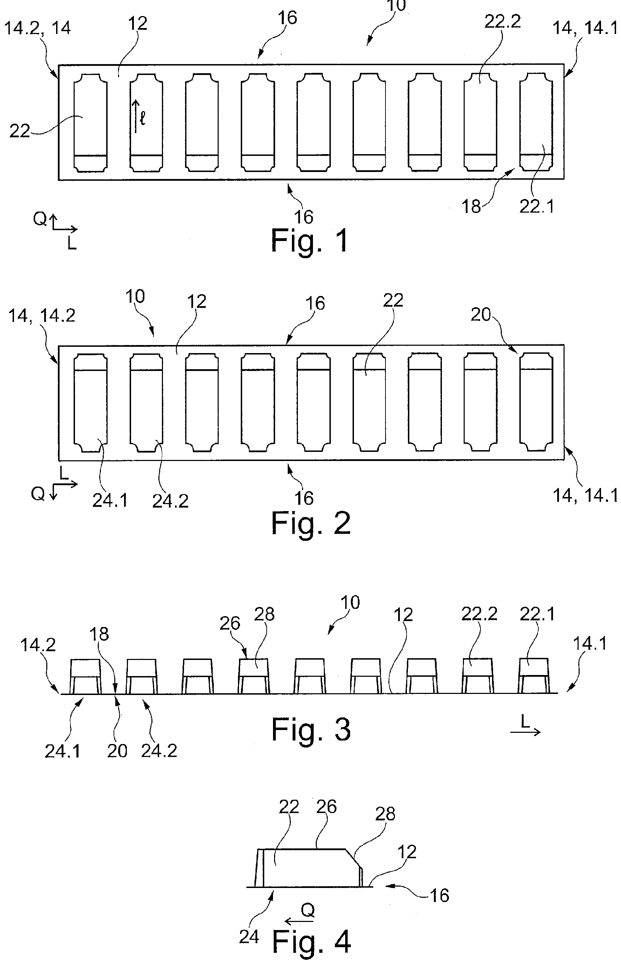

In den Figuren 1 und 2 ist eine Knickschutzvorrichtung 10 für einen Schlauch mit einem Grundkörper 12 dargestellt.

Die Knickschutzvorrichtung 10 ist einstückig ausgeführt und aus nur einem einzigen Material hergestellt.

Dabei kann das Material so gewählt sein, dass es Sterilisierungsverfahren, insbesondere einer Sterilisation durch Gammabestrahlung, durch Behandlung mit Ethylenoxid (ETO) oder durch Beaufschlagung mit Elektronenstrahlen oder Heißdampf, standhält. Bevorzugt handelt es sich um ein Kunststoffmaterial, wie Polypropylen (PP), welches eine Heißdampfbehandlung toleriert, oder alternativ um Polyethylen (PE) oder Polyethylenterephthalat (PET), welche die anderen vorgenannten Sterilisierungsverfahren tolerieren.

Der Grundkörper 12 hat eine rechteckige Form und ist somit bandförmig ausgeführt mit zwei freien Enden. Der Grundkörper 12 weist daher eine Längsrichtung L und eine Querrichtung Q auf.

Die Ausdehnung des Grundkörpers 12 in Längsrichtung L ist größer als in Querrichtung Q.

Die Seiten entlang der Querrichtung Q an den beiden freien Enden des Grundkörpers 12 sind die Querseiten 14 des Grundkörpers 12, und die Seiten entlang der Längsrichtung L sind die Längsseiten 16 des Grundkörpers 12.

Wie in Figur 3 zu erkennen, weist der Grundkörper 12 eine erste Oberfläche 18 und eine entgegengesetzte zweite Oberfläche 20 auf.

Von der ersten Oberfläche 18 stehen Befestigungsvorsprünge 22 ab. In der gezeigten Ausführungsform sind es neun Befestigungsvorsprünge 22.

In der zweiten Oberfläche 20 sind mehrere Befestigungsvertiefungen 24 vorgesehen, wobei jede Befestigungsvertiefung 24 einem Befestigungsvorsprung 22 auf der ersten Oberfläche 18 entspricht. Somit sind in der gezeigten Ausführungsform auch neun Befestigungsvertiefungen 24 vorgesehen.

Die Befestigungsvorsprünge 22 und die Befestigungsvertiefungen 24 erstrecken sich jeweils in Querrichtung Q und sind nebeneinander parallel entlang der gesamten Längsausdehnung des Grundkörpers 12 in Längsrichtung L ausgebildet.

Im dargestellten Ausführungsbeispiel sind die Abstände zwischen benachbarten Befestigungsvorsprüngen 22 bzw. Befestigungsvertiefungen 24 gleich. Die Abstände können alternativ auch ungleich sein.

An beiden freien Enden des Grundkörpers 12 sind in der Nähe der jeweiligen Querseite 14 ein Befestigungsvorsprung 22 und eine Befestigungsvertiefung 24 vorgesehen. Zur besseren Unterscheidung wird die Querseite 14 am ersten freien Ende des Grundkörpers 12 als Querseite 14.1 und die Querseite 14 am entgegengesetzten zweiten freien Ende als zweite Querseite 14.2 bezeichnet.

Die Befestigungsvorsprünge 22 und die Befestigungsvertiefungen 24 sind durch Tiefziehen des Grundkörpers 12 hergestellt, sodass gleichzeitig mit einem Befestigungsvorsprung 22 auch eine Befestigungsvertiefung 24 im Grundkörper 12 erzeugt wird.

Dementsprechend ist die Wandung einer der Befestigungsvorsprünge 22 gleichzeitig die Wandung der entsprechenden Befestigungsvertiefung 24 und die Formen der Befestigungsvertiefungen 24 sind komplementär zu den Formen der Befestigungsvorsprünge 22 vergleichbar mit Negativ-Positiv-Formen.

Im Folgenden wird nun auf die Form der Befestigungsvorsprünge 22, die allesamt identisch ausgeführt sind, eingegangen. Aufgrund der komplementären Form der Befestigungsvertiefungen 24 wird damit jedoch implizit auch die Form der Befestigungsvertiefungen 24 beschrieben.

Die Befestigungsvorsprünge 22 haben eine annähernd rechteckige Grundfläche, wobei in der gezeigten Ausführungsform die Ecken des Rechtsecks ausgekehlt sind.

Die Längsrichtung I der Grundfläche der Befestigungsvorsprünge 22 ist dabei im Wesentlichen senkrecht zur Längsrichtung L des Grundkörpers 12, also parallel zur Querrichtung Q des Grundkörper 12.

Die von der ersten Oberfläche 18 abstehenden Abschnitte der Befestigungsvorsprünge 22 sind vollständig geschlossen und weisen neben einer Oberseite 26 ringsherum Seitenwände auf.

Die Oberseite 26 ist eben ausgeführt und erstreckt sich parallel zum Grundkörper 12.

Um ein Abrutschen der Knickschutzvorrichtung 10 vom Schlauch zu verhindern, kann die Oberseite 26 aufgeraut sein.

Wie in Figur 3 zu erkennen, verjüngt sich die Form der Befestigungsvorsprünge 22 vom Grundkörper 12 in der Richtung, welche senkrecht von der ersten Oberfläche 18 wegweist. Daher ist die Ausdehnung der Befestigungsvorsprünge 22 in Längsrichtung L des Grundkörpers 12 nahe der ersten Oberfläche 18 des Grundkörpers 12 größer als an ihrer Oberseite 26.

Auch verjüngt sich die Form der Befestigungsvorsprünge 22 in Querrichtung Q des Grundkörpers 12 vom Grundköper 12 ausgehend, wie in Figur 4 zu sehen ist.

Zudem weist die Form der Befestigungsvorsprünge 22 eine Führungsfläche 28 auf, die in der Darstellung der Figur 4 zur rechten Seite an die Oberseite 26 angrenzt.

Die Führungsfläche 28 ist schräg zum Grundkörper 12 und zur Oberseite 26 angeordnet und fällt von der Oberseite 26 ausgehend in Richtung zur Längsseite 16 zum Grundkörper 12 hin ab. Die schräge Führungsfläche 28 ermöglicht einen lösbaren, d. h. reversiblen Eingriff des Befestigungsvorsprungs 22 in eine komplementäre Befestigungsvertiefung 24, wodurch das Öffnen der Knickschutzvorrichtung nach Gebrauch und ihre Wiederverwendung für einen anderen Schlauch erleichtert werden.

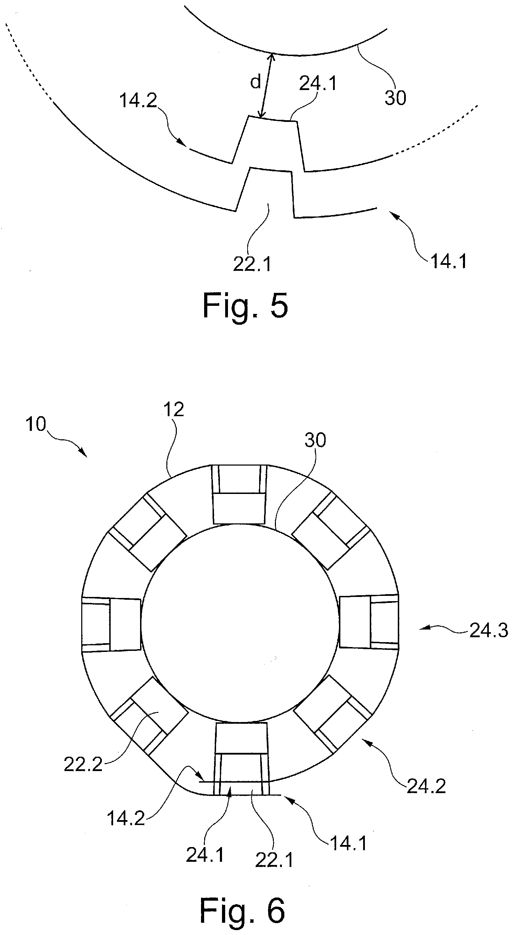

In Figur 5 ist die Knickschutzvorrichtung 10 in lose um den Schlauch 30 gelegter, noch offener Konfiguration gezeigt, bei welcher ein endständiger Befestigungsvorsprung 22.1 der ersten Querseite 14.1 sich bereits in räumlicher Nachbarschaft zu einer endständigen Befestigungsvertiefung 24.1 der zweiten Querseite 14.2 befindet und bei welcher noch kein Eingriff des Befestigungsvorsprungs 22.1 in die Befestigungsvertiefung 24.1 erfolgt. Die Befestigungsvorsprünge 22 der Knickschutzvorrichtung liegen bei dieser offenen Konfiguration noch nicht abstützend an einem Schlauch 30 an, was durch den Abstand d verdeutlicht ist.

In Figur 6 ist die Knickschutzvorrichtung 10 der Figur 5 in montierter Position um den Schlauch 30 dargestellt.

Dabei erfolgt die Befestigung der freien Enden des Grundkörpers 12 aneinander durch denjenigen Befestigungsvorsprung 22, der an der ersten Querseite 14.1 angeordnet ist, und diejenige Befestigungsvertiefung 24, die an der zweiten Querseite 14.2 vorgesehen ist. Zur Vereinfachung wird der Befestigungsvorsprung 22 an der ersten Querseite 14.1 als erster Befestigungsvorsprung 22.1 und die Befestigungsvertiefung 24 an der zweiten Querseite 14.2 als letzte Befestigungsvertiefung 24.1 bezeichnet.

Der erste Befestigungsvorsprung 22.1 wird in die letzte Befestigungsvertiefung 24.1 eingeführt, sodass der Grundkörper 12 an seinen freien Enden verbunden ist und einen geschlossenen Ring beschreibt, bei dem sich die freien Enden des bandförmigen Grundkörpers 12 letztlich überlappen.

Dabei richten die Führungsflächen 28 den ersten Befestigungsvorsprung 22.1 in der letzten Befestigungsvertiefung 24.1 aus.

Der auf diese Weise erhaltene Ring umgibt den Schlauch 30 eng und die Oberseiten 26 jeder der Befestigungsvorsprünge 22 liegen am Schlauch 30 an. Durch die Befestigungsvorsprünge 22 wird der Schlauch 30 gestützt und somit verhindert, dass der Schlauch 30 knicken kann.

Um die Knickschutzvorrichtung 10 an einem Schlauch 30 mit einem geringeren Durchmesser zu befestigen, kann der erste Befestigungsvorsprung 22.1 in die zur letzten Befestigungsvertiefung 24.1 benachbarte Befestigungsvertiefung 24.2 eingeführt werden. Dadurch wird der Durchmesser der zum Ring geformten Knickschutzvorrichtung 10 verringert.

Alternativ kann der an den ersten Befestigungsvorsprung 22.1 angrenzende Befestigungsvorsprung 22.2 selbst in die letzte Befestigungsvertiefung 24.1 eingeführt werden. Auch hierdurch wird der Grundkörper 12 zu einem Ring verbunden, der nun einen geringeren Durchmesser hat.

Denkbar ist selbstverständlich auch, dass die Befestigungsvorsprünge 22.1 und 22.2 in die Befestigungsvertiefungen 24.2 bzw. 24.1 eingreifen, wodurch eine besonders sichere Verbindung der freien Enden des Grundkörpers 12 erreicht wird.

Ein Ring bzw. eine Knickschutzvorrichtung 10 mit noch kleinerem Durchmesser kann durch Weiterführen der beschriebenen Verbindung ebenfalls erzeugt werden, zum Beispiel, indem der erste Befestigungsvorsprung 22.1 in die drittletzte Befestigungsvertiefung 24.3 eingeführt wird usw.

Auch sind andere Geometrien der Befestigungsvorsprünge 22 bzw. der Befestigungsvertiefungen 24 denkbar, insbesondere kann der Grundkörper 12 in Querrichtung Q weiter ausgedehnt sein, um somit einen längeren Abschnitt des Schlauches 30 vor Knicken zu schützen.

Selbstverständlich können neben den Befestigungsvorsprüngen 22 und den Befestigungsvertiefungen 24 noch weitere Vorsprünge oder Vertiefungen vorgesehen sein, die zur Stabilität des Grundkörpers 12 beitragen oder die den Schlauch 30 abstützen.

Der Eingriff der Befestigungsvorsprünge 22 in die Befestigungsvertiefungen 24 kann entweder unlösbar, d. h. irreversibel, oder lösbar, d. h. reversibel, erfolgen. Die unlösbare Variante ist insbesondere für Einwegschläuche geeignet, die nach Benutzung zusammen mit der Knickschutzvorrichtung entsorgt werden.

Um den Schlauch 30 an mehreren Stellen zu schützen, können natürlich auch mehrere der Knickschutzvorrichtungen 10 verwendet und an den entsprechenden Stellen angeordnet werden.

## Patentansprüche

1. Knickschutzvorrichtung für einen Schlauch (30) mit einem bandförmigen Grundkörper (12), mehreren vom Grundkörper (12) abstehenden Befestigungsvorsprüngen (22) und mehreren im Grundkörper (12) vorgesehenen Befestigungsvertiefungen (24), wobei jeder Befestigungsvorsprung (22) derart ausgebildet ist, dass er in eine der Befestigungsvertiefungen (24) eingreifen kann, um die Knickschutzvorrichtung um den Schlauch zu befestigen, **dadurch gekennzeichnet, dass** die Wandung jeder Befestigungsvertiefung (24) gleichzeitig die Wandung eines entsprechenden Befestigungsvorsprungs (22) darstellt.

2. Knickschutzvorrichtung nach Anspruch 1, **dadurch gekennzeichnet, dass** der bandförmige Grundkörper (12) eine erste Oberfläche (18), von der die Befestigungsvorsprünge (22) abstehen, und eine entgegengesetzte zweite Oberfläche (20) aufweist, in der die Befestigungsvertiefungen (24) vorgesehenen sind.

3. Knickschutzvorrichtung nach Anspruch 1 oder 2, **dadurch gekennzeichnet, dass** die Befestigungsvorsprünge (22) an einem freien Ende des bandförmigen Grundkörpers (12) in der Nähe einer ersten Querseite (14.1) des Grundkörpers (12) und die Befestigungsvertiefungen (24) an einem entgegengesetzten freien Ende des bandförmigen Grundkörpers (12) in der Nähe einer zweiten Querseite (14.2) des Grundkörpers (12) vorgesehen sind.

4. Knickschutzvorrichtung nach einem der vorhergehenden Ansprüche, **dadurch gekennzeichnet, dass** die Befestigungsvorsprünge (22) und die Befestigungsvertiefungen (24) durch Umformen des Grundkörpers (12), insbesondere durch Tiefziehen, hergestellt sind.

5. Knickschutzvorrichtung nach einem der vorhergehenden Ansprüche, **dadurch gekennzeichnet, dass** die Knickschutzvorrichtung (10) einstückig ausgeführt ist.

6. Knickschutzvorrichtung nach einem der vorhergehenden Ansprüche, **dadurch gekennzeichnet, dass** die Knickschutzvorrichtung (10) aus nur einem einzigen Material hergestellt ist.

7. Knickschutzvorrichtung nach einem der vorhergehenden Ansprüche, **dadurch gekennzeichnet, dass** die Form der Befestigungsvorsprünge (22) eine annähernd rechteckige Grundfläche hat.

8. Knickschutzvorrichtung nach Anspruch 7, **dadurch gekennzeichnet, dass** die Längsrichtung (I) der Grundfläche im Wesentlichen senkrecht zur Längsrichtung (L) des Grundkörpers (12) orientiert ist.

9. Knickschutzvorrichtung nach einem der vorhergehenden Ansprüche, **dadurch gekennzeichnet, dass** sich die Form der Befestigungsvorsprünge (22) ausgehend vom Grundkörper (12) in wenigstens einer Richtung verjüngt.

10. Knickschutzvorrichtung nach einem der vorhergehenden Ansprüche, **dadurch gekennzeichnet, dass** die Form der Befestigungsvorsprünge (22) an seiner dem Grundkörper (12) abgewandten Oberseite (26) eben ausgeführt ist.

11. Knickschutzvorrichtung nach einem der vorhergehenden Ansprüche, **dadurch gekennzeichnet, dass** die Form der Befestigungsvorsprünge (22) eine schräge Führungsfläche (28) aufweist, die an die Oberseite (26) angrenzt und die zum Grundkörper (12) hin abfällt.

12. Knickschutzvorrichtung nach einem der vorhergehenden Ansprüche, **dadurch gekennzeichnet, dass** die Befestigungsvertiefungen (24) eine Form haben, die zu der Form der Befestigungsvorsprünge (22) komplementär ist.

13. Knickschutzvorrichtung nach einem der vorhergehenden Ansprüche, **dadurch gekennzeichnet, dass** die mehreren Befestigungsvorsprünge (22) und Befestigungsvertiefungen (24) entlang der Längsrichtung (L) des Grundkörpers (12) vorgesehen sind, wobei vorzugsweise die mehreren Befestigungsvorsprünge (22) und die mehreren Befestigungsvertiefungen (24) derart ausgebildet sind, dass gleichzeitig mehrere Befestigungsvorsprünge (22) in jeweils eine der mehreren Befestigungsvertiefungen (24) eingreifen können.

14. Knickschutzvorrichtung nach einem der vorhergehenden Ansprüche, **dadurch gekennzeichnet, dass** die Knickschutzvorrichtung (10) aus einem Material hergestellt ist, das Sterilisierungsverfahren, insbesondere einer Sterilisation durch Gammabestrahlung oder durch Behandlung mit Ethylenoxid, Elektronenstrahlen oder Heißdampf, standhält.

## Claims

1. A kink protection for a hose (30) having a strip-type main body (12), a plurality of fastening projections (22) projecting from said main body (12) and a plurality of fastening recesses (24) provided in the main body (12), wherein each fastening projection (22) is designed such as to be able to engage in one of the fastening recesses (24) in order to fasten the kink protection around the hose, **characterized in that** the wall of each fastening recess (24) simultaneously constitutes the wall of a corresponding fastening projection (22).

2. The kink protection according to claim 1, **characterized in that** the strip-type main body (12) has a first surface (18), from which the fastening projections (22) project, and an opposing second surface (20), in which the fastening recesses (24) are provided.

3. The kink protection according to claim 1 or 2, **characterized in that** the fastening projections (22) are provided on a free end of the strip-type main body (12) in the proximity of a first transverse side (14.1) of the main body (12) and the fastening recesses (24) are provided on an opposing free end of the strip-type main body (12) in the proximity of a second transverse side (14.2) of the main body (12).

4. The kink protection according to any of the preceding claims, **characterized in that** the fastening projections (22) and the fastening recesses (24) are produced by reshaping the main body (12), in particular by deep drawing.

5. The kink protection according to any of the preceding claims, **characterized in that** the kink protection (10) is designed in one piece.

6. The kink protection according to any of the preceding claims, **characterized in that** the kink protection (10) is produced from only a single material.

7. The kink protection according to any of the preceding claims, **characterized in that** the shape of the fastening projections (22) has an approximately rectangular base.

8. The kink protection according to claim 7, **characterized in that** the longitudinal direction (1) of the base is oriented substantially perpendicular to the longitudinal direction (L) of the main body (12).

9. The kink protection according to any of the preceding claims, **characterized in that** the shape of the fastening projections (22) tapers in at least one direction proceeding from the main body (12).

10. The kink protection according to any of the preceding claims, **characterized in that** the shape of the fastening projections (22) is designed plane on its topside (26) averted from the main body (12).

11. The kink protection according to any of the preceding claims, **characterized in that** the shape of the fastening projections (22) has an oblique guide surface (28) which adjoins the topside (26) and which slopes down to the main body (12).

12. The kink protection according to any of the preceding claims, **characterized in that** the fastening recesses (24) have a shape complementary to the shape of the fastening projections (22).

13. The kink protection according to any of the preceding claims, **characterized in that** the plurality of fastening projections (22) and fastening recesses (24) are provided along the longitudinal direction (L) of the main body (12), wherein preferably the plurality of fastening projections (22) and the plurality of fastening recesses (24) are designed such that simultaneously a plurality of fastening projections (22) can each engage in one of the plurality of fastening recesses (24).

14. The kink protection according to any of the preceding claims, **characterized in that** the kink protection (10) is made of a material that withstands sterilization procedures, in particular a sterilization by gamma radiation or by treatment with ethylene oxide, electron beams or superheated steam.

## Revendications

1. Dispositif antiflexion destiné à un tuyau (30) avec un corps de base (12) en forme de bande, plusieurs saillies de fixation (22) qui dépassent du corps de base (12) et plusieurs renfoncements de fixation (24) prévus dans le corps de base (12), dans lequel chaque saillie de fixation (22) est conçue de telle sorte qu'elle puisse venir en prise dans un des renfoncements de fixation (24) pour fixer le dispositif antiflexion autour du tuyau, **caractérisé en ce que** la paroi de chaque renfoncement de fixation (24) représente simultanément la paroi d'une saillie de fixation (22) correspondante.

2. Dispositif antiflexion selon la revendication 1, **caractérisé en ce que** le corps de base (12) en forme de bande présente une première surface (18) depuis laquelle les saillies de fixation (22) dépassent et une seconde surface (20) opposée dans laquelle sont prévus les renfoncements de fixation (24).

3. Dispositif antiflexion selon la revendication 1 ou 2, **caractérisé en ce que** les saillies de fixation (22) sont prévues à une extrémité libre du corps de base (12) en forme de bande à proximité d'un premier côté transversal (14.1) du corps de base (12) et les renfoncements de fixation (24) sont prévus à une extrémité libre opposée du corps de base (12) en forme de bande à proximité d'un second côté transversal (14.2) du corps de base (12).

4. Dispositif antiflexion selon l'une des revendications précédentes, **caractérisé en ce que** les saillies de fixation (22) et les renfoncements de fixation (24) sont fabriqués par déformation du corps de base (12), en particulier par emboutissage.

5. Dispositif antiflexion selon l'une des revendications précédentes, **caractérisé en ce que** le dispositif antiflexion (10) est réalisé en une seule pièce.

6. Dispositif antiflexion selon l'une des revendications précédentes, **caractérisé en ce que** le dispositif antiflexion (10) est fabriqué dans seulement un unique matériau.

7. Dispositif antiflexion selon l'une des revendications précédentes, **caractérisé en ce que** la forme des saillies de fixation (22) a une surface de base approximativement rectangulaire.

8. Dispositif antiflexion selon la revendication 7, **caractérisé en ce que** la direction longitudinale (1) de la surface de base est orientée sensiblement perpendiculairement à la direction longitudinale (L) du corps de base (12).

9. Dispositif antiflexion selon l'une des revendications précédentes, **caractérisé en ce que** la forme des saillies de fixation (22) se rétrécit dans au moins une direction en partant du corps de base (12).

10. Dispositif antiflexion selon l'une des revendications précédentes, **caractérisé en ce que** la forme des saillies de fixation (22) est réalisée de façon plane au niveau de son côté supérieur (26) détourné du corps de base (12).

11. Dispositif antiflexion selon l'une des revendications précédentes, **caractérisé en ce que** la forme des saillies de fixation (22) présente une surface de guidage (28) oblique qui avoisine le côté supérieur (26) et qui tombe en allant vers le corps de base (12).

12. Dispositif antiflexion selon l'une des revendications précédentes, **caractérisé en ce que** les renfoncements de fixation (24) ont une forme qui est complémentaire à la forme des saillies de fixation (22).

13. Dispositif antiflexion selon l'une des revendications précédentes, **caractérisé en ce que** les plusieurs saillies de fixation (22) et renfoncements de fixation (24) sont prévus dans la direction longitudinale (L) du corps de base (12), dans lequel de préférence les plusieurs saillies de fixation (22) et les plusieurs renfoncements de fixation (24) sont conçus de telle sorte que simultanément plusieurs saillies de fixation (22) puissent venir en prise dans respectivement un des plusieurs renfoncements de fixation (24).

14. Dispositif antiflexion selon l'une des revendications précédentes, **caractérisé en ce que** le dispositif antiflexion (10) est fabriqué dans un matériau qui supporte des procédés de stérilisation, en particulier une stérilisation par irradiation gamma ou par traitement avec un oxyde d'éthylène, des faisceaux d'électrons ou de la vapeur surchauffée.
